# EUROPEAN PATENT APPLICATION

(11) **EP 4 538 768 A1**
(43) Date of publication of application: **16.04.2025**
(21) Application number: 23202314.3
(22) Date of filing: 09.10.2023
(51) Int. Cl.: G02B 21/33, G02B 21/36

(54) **A MICROSCOPE OBJECTIVE COVER**

(71) Applicant: CellaVision AB, 223 62 Lund (SE)
(72) Inventor: Nilsson, Jan, 224 66 Lund (SE); Almers, Martin, 226 51 Lund (SE); Åkesson, Viktor, 225 61 Lund (SE)
(74) Representative: AWA Sweden AB

(57) **Abstract**

The present inventive concept relates to a microscope objective cover (10), a microscope system (20), and a method for arranging a microscope objective cover (10) relative to a microscope objective (170). The microscope objective cover (10) defining a cavity (100), the microscope objective cover (10) having an open top end (110) and an opposing bottom end wall (120), wherein the end wall (120) has a first side (122) facing the cavity (100) and a second side (124) opposite the first side (122), and wherein the end wall (122) is provided with an aperture (130); and wherein the cavity (100) defined by the microscope objective cover (10) is configured to house a microscope objective (170) such that an optical axis (172) of the microscope objective (170) is aligned with the aperture (130) of the end wall (120).

## Description

### Technical field

The present inventive concept relates to a microscope objective cover. The present inventive concept further relates to a system comprising a microscope objective cover and to a method for arranging a microscope objective cover relative to a microscope objective.

### Background of the invention

Microscopes are essential tools in various scientific, medical, and industrial applications, enabling visualization and analysis of minute structures and objects. Typically, microscope systems incorporate optical components such as microscope objectives to magnify and resolve objects, and the magnification of a microscope objective is typically related to its numerical aperture. High magnifications usually require a large numerical aperture. As is known within the art, a numerical aperture greater than one typically require that immersion oil is applied such that no air is present between the imaged sample and the optics of the microscope objective. For instance, immersion oil can be applied directly onto the sample or applied onto a cover slip (cover glass) which is positioned on the sample. Depending on the type of sample, a liquid (e.g., glue or immersion oil) can be added to the sample prior to applying the cover slip in order to stabilize it. This is often a tedious process and applying the cover slip may also result in bubbles (e.g., air bubbles) and/or other contaminations (e.g., dust particles) in the sample (or in the liquid applied to the sample), which will affect the imaging negatively.

An alternative of using microscope objectives with high numerical apertures for capturing high-resolution images is Fourier ptychographic microscopy (FPM). Fourier ptychographic microscopy is an iterative computational imaging technique in which images of a sample is captured under different illumination conditions and the captured images are used to reconstruct a high-resolution image of the sample. To be able to produce the high-resolution image using FPM, there are requirements on the imaged sample. For instance, in case refractive index variations in the sample are too high, the iterative reconstruction of the high-resolution image may fail to converge. Refractive index variations in samples may be due to surface roughness. In case the surface of the sample is rough/uneven, there may be a large number of interfaces between the sample and surrounding air. One way of reducing refractive index variations in the sample is to apply a thin layer of a liquid (e.g., glue or immersion oil) to the sample and, potentially, use a cover slip to ensure that the layer of applied liquid is even. The liquid together with the cover slip may then act to reduce the surface roughness of the sample, whereby variations in the refractive index is reduced. Other types of substances (e.g., gel-like fluids) may be used for this purpose as well. However, many of the issues associated with using liquids, such as immersion oil or glue, discussed above also apply in this context. Thus, there is a need for improvement within the art.

### Summary of the invention

In view of the above, it is an object of the present inventive concept to provide a microscope objective cover that may be used to protect a microscope objective. For instance, it may be used to reduce, or even prevent, contact between liquid applied to the sample and the microscope objective.

A further object is to provide a microscope objective cover that, when in use, may allow liquid applied to a sample to extend between the microscope objective cover and the sample, whereby refractive index variations across a surface of the sample may be reduced.

A further object is to provide a microscope objective cover that, when in use, may allow liquid applied to the sample to be smeared out by the microscope objective cover, and thereby provide a smooth and/or even surface of the applied liquid.

A further object is to, at least partly, mitigate, alleviate or eliminate one or more of the above-identified deficiencies in the art and disadvantages singly or in any combination and solve at least the above-mentioned problem.

According to a first aspect, a microscope objective cover is provided. The microscope objective cover defining a cavity, the microscope objective cover having an open top end and an opposing bottom end wall, wherein the end wall has a first side facing the cavity and a second side opposite the first side, and wherein the end wall is provided with an aperture; and wherein the cavity defined by the microscope objective cover is configured to house a microscope objective such that an optical axis of the microscope objective is aligned with the aperture of the end wall.

Within the context of this disclosure, the wording "aligned" should be construed as a relative position between components to ensure proper functioning of said components. In this context, when it is stated that the optical axis of the microscope objective is aligned with the aperture of the end wall, it is meant that light is allowed to enter propagate through the aperture into the microscope objective. An optimal alignment may thus be that the optical axis of the microscope objective coincides with a center of the aperture. It is however to be understood that the optical axis of the microscope objective may not necessarily coincide with the center of the aperture, as it is enough that light may propagate into the microscope objective without being blocked by the end wall.

By the present inventive concept, a liquid applied to a sample to be observed by the microscope objective is allowed to extend between the sample and the microscope objective cover. This can, depending on a refractive index of the applied liquid, reduce refractive index variations across a surface of the sample. The liquid may be a mounting medium and/or an immersion medium. Examples of liquid include, but are not limited to, immersion oil, water, and glycerin. A viscosity of the liquid may vary. For instance, the liquid may be gel-like. It is to be understood that the liquid may be a mixture of one or more of these example liquids. In addition to being used as mounting medium and/or immersion medium, the fluid may, after being applied to the sample, act to reduce refractive index variations across a surface of the sample.

Further, an even layer of liquid may be allowed to be applied to the sample without needing to use a cover slip. This since a thickness of the layer of applied liquid may depend on a position of the microscope objective cover relative to the sample. Further, a presence of bubbles in applied liquid may be allowed to be reduced or even avoided. Since a cover slip may not be needed, any bubbles may, e.g., be allowed to escape through the aperture of the end wall.

The microscope objective cover may comprise: a first member comprising the bottom end wall of the microscope objective; and a second member having an open first end and an opposing open second end, wherein the open second end of the second member may be the open top end of the microscope objective cover; and wherein the first member may be releasably attachable to the second member.

Within the context of this disclosure, the wording "releasably attachable" should be construed as a connection that couples objects and allows for detachment if needed. Such connection may, e.g., be realized by use of screws, clamps, threads, etc.

An associated advantage is that easier mounting of the microscope objective cover on the microscope objective may be allowed. Further, retrofitting the microscope objective cover on existing microscope objectives may be allowed.

The open second end of the second member may comprise a flange extending in a radially inward direction.

An associated advantage is that retrofitting the second member to existing microscope objectives may be allowed. Further, a less intrusive way of mounting the microscope objective cover on the microscope objective may be allowed.

The microscope objective cover may further comprise: a transparent member covering the aperture of the end wall.

Within the context of this disclosure, the wording "transparent" should be construed as allowing light to propagate through. In particular, the transparent member may be configured to allow a large portion of visible light (and, possible, near visible light) to propagate through it. It is however to be understood that a portion of light incident on the transparent member may be reflected, refracted and/or absorbed by the transparent member. In this context, "transparent member" should be understood as a member configured to allow light of relevant wavelengths (e.g., wavelengths of light that emanate from a sample to be imaged) to propagate through it.

An associated advantage is that the transparent member may allow to protect the microscope objective from being contaminated by a liquid applied to the sample. Further, a more even surface of the sample facing the microscope objective may be allowed. Put differently, a reduction of refractive index variations across the surface of the sample facing the microscope objective may be allowed.

The transparent member may be fixedly coupled to the second side of the end wall.

Within the context of this disclosure, the wording "fixedly coupled" should be construed as a connection that couples objects such that they are not allowed to move relative each other. Such connection may, e.g., be realized by use of adhesives, screws, clamps, threads, etc.

The second side of the end wall may comprise one or more protrusions.

An associated advantage is that a presence of bubbles (e.g., air bubbles) between the transparent member and the sample may be reduced. This since the one or more protrusions may define one or more passages through which bubbles may be allowed to escape.

The microscope objective cover may further comprise: an elastically compressible member attached to the second side of the end wall.

Within the context of this disclosure, the wording "elastically compressible" should be construed as being able to deform in response to an external force and to return to substantially its original form when the external force is removed.

An associated advantage is that the elastically compressible member may be allowed to act as a safety measure between the sample and the microscope objective cover. Put differently, the elastically compressible member may prohibit the end wall of the microscope objective cover to accidently interact with, and possible damage, the sample. For instance, the elastically compressible member may be configured such that it will engage a sample holder (e.g., a portion of the sample holder without any sample) onto which the sample is applied before the microscope objective cover engages the sample.

The end wall may be displaceable relative to the microscope objective in response to being subjected to an external force having a component along a direction towards the cavity.

An associated advantage is that the displaceable end wall may act as a safety measure. Put differently, the displaceable end wall may prohibit the microscope objective cover to damage the sample in case the microscope objective cover is positioned too close to the sample.

According to a second aspect a microscope system is provided. The microscope system comprising: a microscope objective having an optical axis; a microscope objective cover according to the first aspect mountable relative to the microscope objective for achieving a mounted state in which the microscope objective is housed in the cavity of the microscope objective cover; and wherein the microscope objective cover in its mounted state is arranged such that the optical axis of the microscope objective is aligned with the aperture of the end wall of the microscope objective cover.

The microscope objective cover in its mounted state may be arranged such that the end wall in response to an external force is allowed to move relative to the microscope objective along the optical axis of the microscope objective.

The microscope system may further comprise: a sample holder configured to hold a sample; and wherein the microscope objective cover in its mounted state and the sample holder may be configured to be positioned in close proximity to each other.

The microscope system may further comprise: an image sensor, wherein the microscope objective may be configured to image a sample onto the image sensor; an illumination system configured to illuminate the sample with a plurality of illumination patterns; and circuitry configured to execute: an acquisition function configured to acquire a set of digital images by being configured to: control the illumination system to illuminate the sample with each illumination pattern of the plurality of illumination patterns, and control the image sensor to capture a digital image for each illumination pattern of the plurality of illumination patterns, and a construction function configured to construct a digital image depicting the sample using the acquired set of digital images.

The above-mentioned features of the first aspect, when applicable, apply to this second aspect as well. In order to avoid undue repetition, reference is made to the above.

According to a third aspect a method for arranging a microscope objective cover according to the first aspect relative to a microscope objective having an optical axis is provided. The method comprising: mounting the microscope objective cover such that the microscope objective is housed in the cavity of the microscope objective cover; and arranging the microscope objective cover such that the optical axis of the microscope objective is aligned with the aperture of the end wall of the microscope objective cover.

The method may further comprise: providing a sample to a sample holder; applying liquid to the sample; and positioning the microscope objective cover and the sample holder such that the liquid may extend between the sample and the second side of the end wall of the microscope objective cover.

The above-mentioned features of the first and/or second aspects, when applicable, apply to this third aspect as well. In order to avoid undue repetition, reference is made to the above.

Further features of, and advantages with, the present inventive concept will become apparent when studying the appended claims and the following description. The skilled person will realize that different features of the present inventive concept may be combined to create variants other than those described in the following, without departing from the scope of the present inventive concept.

### Brief description of the drawings

The aspects of the present inventive concept, including its particular features and advantages, will be readily understood from the following detailed description and the accompanying drawings, in which:
Figure 1A is an illustration of a microscope objective cover.
Figure 1B is an illustration of a view of the microscope objective cover of Fig. 1A in which a portion of a wall of the microscope objective cover has been removed for illustrative purposes.
Figure 1C is an illustration of the microscope objective cover of Fig. 1A housing a microscope objective in a view in which a portion of the wall of the microscope objective cover and a portion of the microscope objective have been removed for illustrative purposes.
Figure 1D is an illustration of the first and second members of the microscope objective cover in a detached state.
Figure 2 is a schematic illustration of a liquid applied to a sample being allowed to extend between the sample and the second side of the end wall the microscope objective cover.
Figure 3 is a schematic illustration of a microscope system.
Figure 4 is a block scheme of a method for arranging the microscope objective cover of Fig. 1A - Fig. 1D relative to a microscope objective.
Figure 5 is a schematic illustration of a liquid applied to a sample being allowed to extend between the sample and a cover slip arranged on the liquid, and a further liquid applied to the cover slip being allowed to extend between the cover slip and the second side of the end wall of the microscope objective cover.

### Detailed description

The present inventive concept will now be described more fully hereinafter with reference to the accompanying drawings, in which currently preferred variants of the inventive concept are shown and discussed. This inventive concept may, however, be implemented in many different forms and should not be construed as limited to the variants set forth herein; rather, these variants are provided for thoroughness and completeness, and fully convey the scope of the present inventive concept to the skilled person. As illustrated in the figures, features may be exaggerated for illustrative purposes and, thus, may be provided to illustrate the general structures of variants of the present inventive concept. Like reference numerals refer to like elements throughout the description.

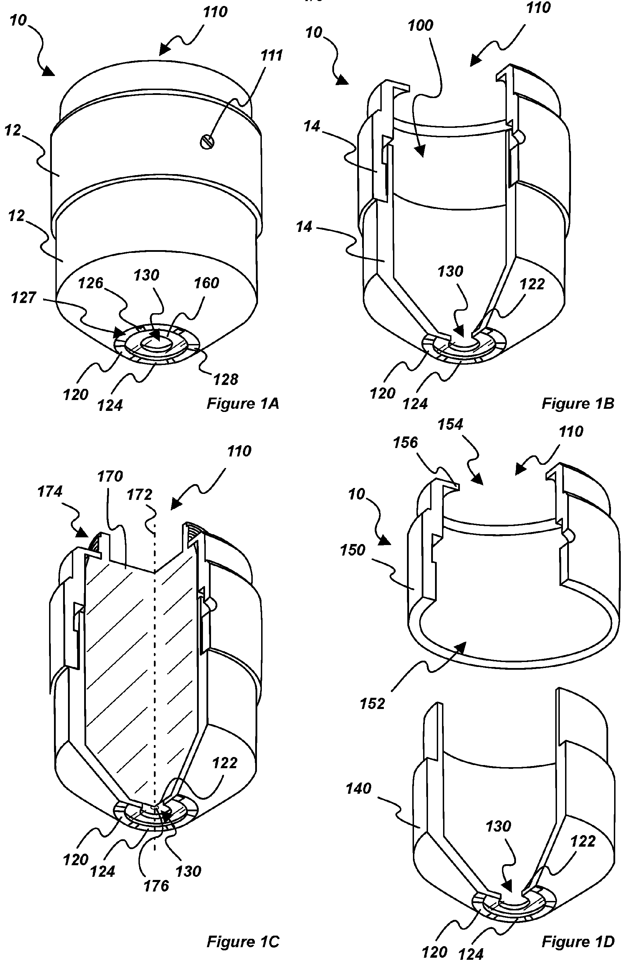

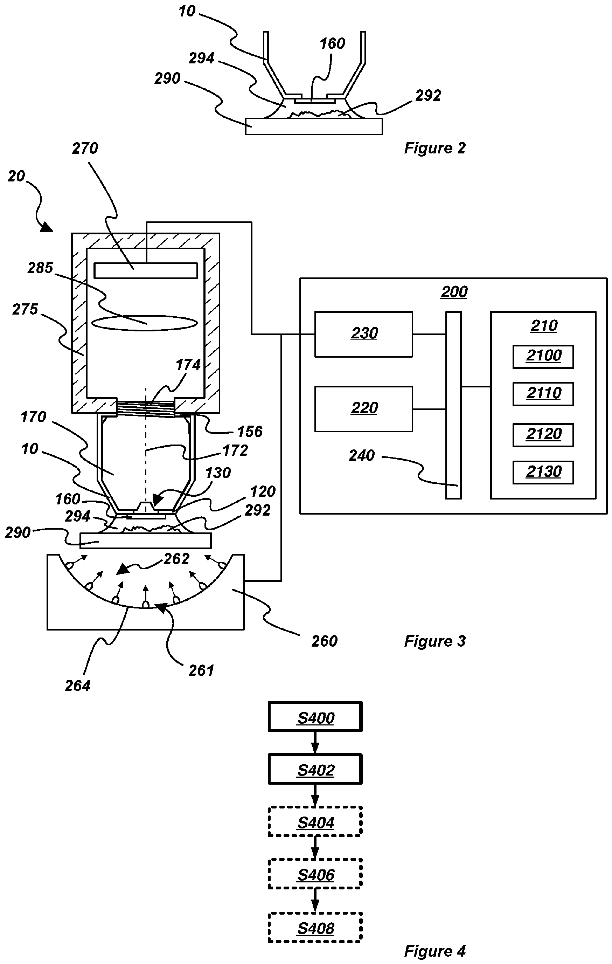

A microscope objective cover 10 will now be described with reference to Fig. 1A- Fig. 1D. Figure 1A illustrates a microscope objective cover 10. Figure 1B illustrates a view of the microscope objective cover 10 in which a portion of a wall 14 of the microscope objective cover 10 has been removed for illustrative purposes. As is seen in Fig. 1B, the microscope objective cover 10 defines a cavity 100. The cavity 100 defined by the microscope objective cover 10 is configured to house a microscope objective 170, which is illustrated in the example of Fig. 1C. In the example illustrated in Fig. 1C, a portion of the wall 14 of the microscope objective cover 10 and a portion of the microscope objective 170 have been removed for illustrative purposes. The microscope objective cover 10 may be dimensioned such that it can house the microscope objective 170. The microscope objective cover 10 may be configured to be fastened relative to the microscope objective 170. For instance, the microscope objective cover 10 may be configured to be attached to the microscope objective 170. The microscope objective cover 10 may be clamped to the microscope objective 170. Alternatively, or additionally, the microscope objective cover 10 may be configured to be attached to other parts of a microscope system 20 (e.g., an arm and/or a base) comprising the microscope objective 170. A suitable microscope system 20 will be described further below with reference to Fig. 3. A state when the microscope objective 170 is housed by the cavity 100 of the microscope objective cover 10 may be referred to as a mounted state. Thus, Fig. 1C illustrates a mounted state of the microscope cover 10.

As is seen in Fig. 1A - Fig. 1D, the microscope objective cover 10 has an open top end 110 and an opposing bottom end wall 120. The opposing bottom end wall 120 may hereafter be referred to as the end wall 120. The end wall 120 may be, at least substantially, flat. The end wall 120 may, as is illustrated in Fig. 1A - Fig. 1D, have a shape similar to a truncated cone. As is illustrated in the examples of Fig. 1A - Fig. 1D, the microscope objective cover 10 may have an elongated shape. The microscope objective cover 10 may have an overall cylindrical shape. A shape of the microscope objective cover 10 may be similar to that of the microscope objective 170 which the microscope objective cover 10 is configured to house. It is however to be understood that the microscope objective cover 10 may have other shapes. For instance, the microscope objective cover 10 may have a conical shape. Further, the microscope objective cover 10 may have an elliptical cross section as is illustrated in Fig. 1A- Fig. 1D. However, it is to be understood that the cross section of the microscope objective cover 10 may have other shapes. For example, the cross section may have a polygonal shape (e.g., triangular, rectangular etc.). Further, the microscope objective cover 10 may have an envelope surface 12. The envelope surface 12 may be a surface of the wall 14 of the microscope objective cover 10. The microscope objective cover 10 may be made of any suitable material. For instance, a material of which the microscope objective cover 10 is made of may comprise one or more of plastic, metal, rubber, and ceramic.

The microscope objective cover 10 may be formed as a single piece. Alternatively, the microscope objective cover 10 may, as is illustrated in Fig. 1A - Fig. 1D, comprise a first member 140 and a second member 150. The first member 140 may comprise the end wall 120 of the microscope objective cover 10. The second member 150 has an open first end 152 and an opposing open second end 154. The open second end 154 of the second member 150 may be the open top end 110 of the microscope objective cover 10. The first member 140 may be releasably attachable to the second member 150. Thereby, mounting the microscope objective cover 10 relative to the microscope objective 170 may be easier than if the microscope objective cover 10 was formed as a single piece. For instance, the first member 140 may be detached from the second member 150, whereby the microscope objective 170 may be placed between the first member 140 and the second member 150. Then, the first member 140 and the second member 150 may be attached, whereby the microscope objective 170 is housed by the cavity 100 of the microscope objective cover 10. Here, "releasably attachable" should be understood as a connection that couples the first member 140 and the second member 150, while detachment, if needed, is allowed. Such connection may, e.g., be realized by use of screws, clamps, threads, adhesives, etc. As in the example illustrated in Fig. 1A, the first member may be attached to the second member using a screw 111. Alternatively, or additionally, a portion of the first member 140 and a portion of the second member 150 may comprise threads which may be configured to engage each other, whereby the first member 140 and the second member 150 may be releasably attachable to each other. As is further illustrated in the example of Fig. 1A - Fig. 1D, the open second end 154 of the second member 150 may comprise a flange 156 extending in a radially inward direction. The flange may be configured such that, when the microscope objective 170 is mounted to a microscope system 20, the flange 154 may be clamped between the microscope objective 170 and another parts (or parts) of the microscope system 20. This may, among other things, allow retrofitting the second member 150 to existing microscope objectives. Further, this may allow removing the first member 140 (e.g., for cleaning purposes, for imaging without the first member, etc.) without having to remove the second member 150 as well.

As is illustrated in Fig. 1C, the microscope objective cover 10 may be configured such that a portion 174 of the microscope objective 170 may be allowed to protrude through the open top end 110. The portion 174 of the microscope objective 10 protruding through the open top end may be used to fasten the microscope objective 10 relative to other parts of the microscope system 20 (e.g., other optical components, lenses, image sensors, etc.). As is illustrated in the example of Fig. 1C, the portion 174 of the microscope objective 10 protruding through the open top end 110 may be provided with threads and/or another suitable type of fastening means. The end wall 120 has a first side 122 facing the cavity 100 and a second side 124 opposite the first side 122. The end wall 120 is provided with an aperture 130. The aperture 130 may allow communication (e.g., optical communication) between the first side 122 and the second side 124 of the end wall 120. The aperture 130 may allow communication (e.g., optical communication) between an outside of the microscope objective cover 10 and the cavity 100. The aperture 130 of the microscope objective cover 10 may be similar in size and/or shape to an aperture 176 of the microscope objective which the microscope objective cover 10 is configured to house. A size of the aperture 130 of the microscope objective cover 10 may be equal to or larger (as is illustrated in the example of Fig. 1C) than a size of the aperture 176 of the microscope objective 170 which the microscope objective cover 10 is configured to house.

In the mounted state of the microscope objective cover 10 illustrated in Fig. 1C, an optical axis 172 of the microscope objective 170 is aligned with the aperture 130 of the end wall 120. Here, "aligned" should be understood as a relative position between the microscope objective cover 10 and the microscope objective 170 at which the microscope objective 170 may function as intended (e.g., its imaging properties are substantially unaffected). For instance, when the optical axis 172 of the microscope objective 10 is aligned with the aperture 130 of the end wall 120, light may propagate through the aperture 130 of the end wall 120 and into the microscope objective 170. Put differently, capabilities of the microscope objective 170 to image objects (e.g., a sample 292) may be preserved when the optical axis 172 of the microscope objective 170 is aligned with the aperture 130 of the end wall 120. As an example, an optimal alignment may be that the optical axis 172 of the microscope objective 170 coincides with a center point of the aperture 130 of the end wall 120. It is however to be understood that the optical axis 172 of the microscope objective 170 when aligned with the aperture 130 may not necessarily coincide with the center of the aperture 130, as it may be sufficient that light may propagate into the microscope objective 170 via the aperture 130 without being blocked by the end wall 120.

As is illustrated in the example of Fig. 1A- Fig. 1D, the microscope objective cover 10 may further comprise a transparent member 160. The transparent member 160 may be arranged to cover the aperture 130 of the end wall 120. The transparent member 160 may have the same function as a cover slip. Hence, by the microscope objective cover 10 comprising the transparent member 160, a need for applying a separate cover slip to a sample 292 to be imaged and/or analyzed may be reduced or even removed. Here, "transparent" should be understood as allowing light to propagate through. In this context, "transparent member" should be understood as an optical component configured to allow light of relevant wavelengths (e.g., wavelengths of light that emanate from a sample 292 to be imaged when it is illuminated by an illumination system 260) to propagate through it. The transparent member 160 may be made of a material similar to that of cover slips conventionally used in optical microscopy. As is known within the art, the material of cover slips may be chosen depending on a type of the sample 292 to be imaged and/or analyzed. Hence, the material of the transparent member 160 may be chosen depending on the type of the sample 292 to be imaged and/or analyzed. The transparent member 160 may be fixedly coupled to the second side 124 of the end wall 120. Here, "fixedly coupled" should be understood as a connection that couples objects such that they are not allowed to move relative each other. Such connection may, e.g., be realized by use of adhesives, screws, clamps, threads, etc. In the example illustrated in Fig. 1A - Fig. 1D, the transparent member 160 is coupled to the second side 124 of the end wall 120 by an adhesive applied between the transparent member 160 and a portion of second side 124 of the end wall 120.

As is illustrated in Fig. 1A - Fig. 1D, the second side 124 of the end wall 120 may comprise one or more protrusions 126. The one or more protrusions 126 may act to reduce a presence of bubbles (e.g., air bubbles) in a liquid between the transparent member 160 and the sample 292 to be imaged and/or analyzed. Bubbles may be a common problem in microscopy. For instance, bubbles may be trapped between a sample and a cover slip applied to the sample. A further example is that bubbles may be an issue for wet microscope objectives (e.g., high-magnifying optical microscope objectives), since conventional microscope objectives typically comprise a circular protrusion which acts to protect optical components (e.g., a front lens) of the microscope objective. Within this circular protrusion, bubbles can be trapped and, since the protrusion is circular, they cannot escape. However, the one or more protrusions 126 illustrated in Fig. 1A - Fig. 1D may define one or more passages 127 through which bubbles may be allowed to escape. Further, the one or more protrusions 126 may be arranged such that the transparent member 160 may be clamped by the one or more protrusions 126 (e.g., in a radial direction of the transparent member 160), thereby fixedly coupling the transparent member 160 to the second side 124 of the end wall 120.

The end wall 120 of the microscope objective cover 10 may be displaceable relative to the microscope objective 170 in response to being subjected to an external force having a component along a direction towards the cavity 100. Thus, by being displaceable, the end wall may be prohibited to accidently damage the sample in case the microscope objective cover 10 is positioned too close to the sample 292 to be imaged and/or analyzed. The external force may have a component parallel to the optical axis 172 of the microscope objective 170. A displaceable end wall may be implemented in different ways. For instance, a portion of the microscope objective cover 10 may be made of an elastic material which may compress in response to the external force having a component along a direction towards the cavity 100. As a further example, the microscope objective cover 10 may comprise a spring and/or an elastically compressible O-ring (e.g., made of rubber or another elastic material) arranged between the first member 140 and the second member 150, thereby allowing for the first member 140 to move relative to the second member 150. Movement may be restricted along a direction towards the cavity 100 (e.g., parallel to the optical axis 172 of the microscope objective 170 as illustrated in Fig. 1C). In case the microscope objective cover 10 is formed as single piece, the spring and/or the O-ring may be arranged at a connection point at which the microscope objective cover 10 may be attached relative to the microscope objective 170. For instance, the spring and/or the O-ring may be arranged between the microscope objective cover 10 and the microscope objective 170, or between the microscope objective cover 10 and a different part of a microscope system 20 which the microscope objective cover 10 and the microscope objective 170 forms part of.

The microscope objective cover 10 may further comprise an elastically compressible member 128. The elastically compressible member 128 may be attached to the second side 124 of the end wall 120. The elastically compressible member 128 may be similar to a protrusion of the one or more protrusions 126. For instance, a protrusion of the one or more protrusions 126 may be the elastically compressible member 128. The elastically compressible member 128 may be allowed to act as a safety measure between the microscope objective cover 10 and a sample 292 to be imaged and/or analyzed. Put differently, the elastically compressible member 128 may prohibit the end wall 120 of the microscope objective cover 10 to accidently interact with, and possible damage, the sample 292 (and/or a sample holder 290 which may hold the sample 292) in case the microscope objective cover 10 is positioned too close to the sample 292 (and/or a sample holder 290 which may hold the sample 292).

As is schematically illustrated in Fig. 2, a liquid 294 applied to a sample 292 to be observed and/or analyzed by the microscope objective 170 (not illustrated in Fig. 2) is allowed to extend between the sample 292 and the second side 124 of the end wall 120 the microscope objective cover 10. In the example illustrated in Fig. 2, the liquid 294 is immersion oil. However, it is to be understood that other liquids may be used as well. For instance the liquid 294 may be water or glycerin. It is to be understood that the liquid 294 may be a mixture of different liquids. In case the microscope objective cover 10 comprises a transparent member 160 (as illustrated in Fig. 2), the applied liquid 294 may be allowed to extend between the sample 292 and the transparent member 160. This can, depending on a refractive index of the applied liquid 294, reduce refractive index variations in a plane across the sample 292. The plane across the sample 292 may at least partly coincide with the sample 292 and have a normal substantially parallel to the optical axis 172 of the microscope objective 170. As an example, a refractive index of typical samples may be 1.3 or higher, whereas a refractive index of the applied liquid 294 may be between 1.3 and 1.5. As an example, immersion oil typically has a refractive index of 1.5. Air, on the other hand, has a refractive index of approximately 1.0. Thus, since a difference between refractive indexes of the sample 292 and the applied liquid 294 may be smaller than a difference between refractive indexes of the sample 292 and surrounding air, applying the liquid 294 to the sample may thereby reduce refractive index variations across the surface of the sample 292.

A microscope system 20 comprising a microscope objective cover 10 and a microscope objective 12 will now be described with reference to Fig. 3. Many of the features and/or advantages described in connection with Fig. 1A - Fig. 1D and Fig. 2 also apply to the microscope system 20 illustrated in Fig. 3. To avoid unnecessary repetition, reference is made to the above description. Figure 3 is a schematic illustration of the microscope system 20. Further, to improve legibility of Fig. 3, some parts (e.g., the illumination system 260, the microscope objective 170, the microscope objective cover 10, etc.) of the microscope system 20 are illustrated as cross sections.

As is illustrated in the example of Fig. 3, the microscope system 20 comprises a microscope objective 170 and a microscope objective cover 10. The microscope objective cover 10 illustrated in Fig. 3 may be the microscope objective cover 10 illustrated in Fig. 1A - Fig. 1D. Hence, it should be understood that features illustrated in Fig. 1A - Fig. 1D and described above may be present in the microscope objective cover 10 of Fig. 3 even though they are not explicitly illustrated in Fig. 3. For instance, the microscope objective cover 10 of Fig. 3 may comprise the first member 140 and the second member 150 as described previously. The microscope system 20 may, as is illustrated in the example of Fig. 3, further comprise one or more of a sample holder 290, an image sensor 270, an illumination system 260, a relay lens 285, and circuitry 200. As is illustrated in Fig. 3, the image sensor 270 and/or the relay lens 285 may be enclosed in a casing 275. The casing 275 may form part of a camera or another part of the microscope system 20. The casing 275 may be configured to allow attachment of the microscope objective 170. Such attachment may be allowed by threads, which is the case in the example of Fig. 3. The threads of the casing 275 may be configured to engage with the threads of the portion 174 of the microscope objective 170. It is to be understood that the microscope objective 170 in a mounted state may be allowed to move relative to the sample 292 along the optical axis 172 of the microscope objective 170. Put differently, the microscope objective 170 in the mounted state may be allowed to move relative to the sample 292 along a focusing direction, thereby allowing the sample 292 to be imaged in focus. Alternatively, or additionally, the sample holder 290 may be allowed to move in the focusing direction (i.e., along the optical axis 172 of the microscope objective 170), thereby allowing the sample 292 to be imaged in focus. When the microscope objective 170 is attached to the casing 275, the optical axis 172 of the microscope objective may be aligned with the image sensor 270 and/or the relay lens 285. As is further illustrated in Fig. 3, the flange 156 of the microscope objective cover 10 may be clamped between the microscope objective 170 and the casing 275 when the microscope objective 170 is attached to the casing 275.

The circuitry 200 may form part of a computing device (not illustrated). Examples of suitable computing devices comprise computers, servers, smartphones, tablets, etc. The computing device may further be implemented as part of a cloud server and/or a distributed computing arrangement. It is further to be understood that the computing device may comprise further components, for example input devices (mouse, keyboard, touchscreen, etc.) and/or a display. The computing device may further comprise a power source, for example a connection to electrical power, a battery, etc. As is illustrated in the example of Fig. 3, the circuitry 200 may comprise one or more of a memory 210, a processing unit 220, a transceiver 230, and a data bus 240. The processing unit 220 may comprise a central processing unit (CPU) and/or a graphical processing unit (GPU). The transceiver 230 may be configured to communicate with external devices. For example, the transceiver 230 may be configured to communicate with servers, computer external peripherals (e.g., external storage), etc. The external devices may be local devices or remote devices (e.g., a cloud server). The transceiver 230 may be configured to communicate with the external devices via an external network (e.g., a local-area network, the internet, etc.) The transceiver 230 may be configured for wireless and/or wired communication. Suitable technologies for wireless communication are known to the skilled person. Some non-limiting examples comprise Wi-Fi, Bluetooth and Near-Field Communication (NFC). Suitable technologies for wired communication are known to the skilled person. Some non-limiting examples comprise USB, Ethernet, and Firewire. The memory 210, the processing unit 220, and the transceiver 230 may communicate via the data bus 240. The illumination system 260 and/or the image sensor 270 may be configured to communicate with the circuitry 200 via the transceiver 230 as illustrated in Fig. 3. Additionally, or alternatively, the illumination system 260 and/or the image sensor 270 may be configured to directly (e.g., via a wired connection) communicate with the data bus 240. The memory 210 may be a non-transitory computer-readable storage medium. The memory 210 may be a random-access memory. The memory 210 may be a non-volatile memory. The memory 210 may comprise one or more of a buffer, a flash memory, a hard drive, a removable media, a volatile memory, a non-volatile memory, a random-access memory (RAM), or another suitable device. In a typical arrangement, the memory may include a non-volatile memory for long term data storage and a volatile memory that functions as system memory for the microscope system 20. The memory 210 may exchange data within the circuitry 200 over the data bus 240. As is illustrated in the example of Fig. 3, the memory 210 may store program code portions 2100, 2110, 2120, 2130 corresponding to one or more functions. The program code portions 2100, 2110, 2120, 2130 may be executable by the processing unit 220, which thereby performs the functions. Hence, when it is referred to that the circuitry 200 is configured to execute a specific function, the processing unit 220 may execute program code portions corresponding to the specific function which may be stored on the memory 210. However, it is to be understood that one or more functions of the circuitry 200 may be hardware implemented and/or implemented in a specific integrated circuit. For example, one or more functions may be implemented using field-programmable gate arrays (FPGAs). Put differently, one or more functions of the circuitry 200 may be implemented in hardware or software, or as a combination of the two.

Even though the image sensor 270 is illustrated on its own in Fig. 3, it is to be understood that the image sensor 270 may be comprised in a camera (not illustrated). In the example of Fig. 3, the sample holder 290 comprises a microscope slide onto which a sample 292 has been applied. Further, in the example of Fig. 3 liquid 294 has been applied to the sample 292. The sample holder 290 may be configured to hold the sample 292 to be analyzed. The sample holder 290 may be movable (e.g., by being coupled to manual and/or motorized stages), thereby allowing the sample 292 to be moved such that different portions of the sample 292 may be imaged by the microscope objective 170. The microscope objective 170 has an optical axis 172. The microscope objective 170 may be configured to image the sample 292 onto the image sensor 270. The microscope system 20 may comprise further components used for imaging. For instance, the microscope system 20 may, as in the example of Fig. 3, comprise a relay lens 285 which, together with the microscope objective 170, may be configured to image the sample 292 onto the image sensor 270. The image sensor 270 may be configured to capture color images.

The microscope objective cover 10 is mountable relative to the microscope objective 170 for achieving a mounted state in which the microscope objective 170 is housed in the cavity 100 of the microscope objective cover 10. The microscope objective cover 10 in its mounted state is arranged such that the optical axis 172 of the microscope objective 170 is aligned with the aperture 130 of the end wall 120 of the microscope objective cover 10. The microscope objective cover 10 in its mounted state may be arranged such that the end wall 120 of the microscope objective cover 10 in response to an external force may be allowed to move relative to the microscope objective 170 along the optical axis 172 of the microscope objective 170. The microscope objective cover 10 in its mounted state and the sample holder 290 may be configured to be positioned in close proximity to each other. By being positioned in close proximity to each other, liquid 294 applied to the sample 292 may be allowed to extend between the sample 292 and the second side 124 of the end wall 120 of the microscope objective cover 10 (which is illustrated in the examples of Fig. 2 and Fig. 3).

As is illustrated in the example of Fig. 3, the illumination system 260 may be configured to illuminate the sample 292 with a plurality of illumination patterns. The illumination system 260 may be an illumination system suitable for Fourier ptychography microscopy (FPM). The illumination system 260 may comprise a plurality of light sources 261. One or more light sources of the plurality of light sources 261 may be light-emitting diodes (LEDs). One or more light sources of the plurality of light sources may be configured to emit narrow-band light. Here, "narrow-band light" should be construed as light having wavelengths within a relatively narrow range of wavelengths. A bandwidth of narrow-band light may be 70 nm or less. For instance, the bandwidth of narrow-band light may be 20 nm or less. Narrow-band light may appear as a single color. Narrow-band light may be monochromatic light. Narrow-band light may be emitted by single-colored LEDs. Alternatively, or additionally, one or more light sources of the plurality of light sources may be configured to emit white light. Here, "white light" should be understood as broad-spectrum light. For instance, an LED configured to emit white light may, compared to narrow-spectrum LEDs (e.g., a single-colored LED), emit light in a broad spectrum of wavelengths. White light may be characterized in that it may resemble sunlight. The spectrum of the white light may cover a majority of the visible light spectrum, as opposed to light emitted by single-colored LEDs. Typically, an LED configured to emit white light may comprise an LED configured to emit blue light and a fluorescent layer configured to convert the blue light emitted by the LED to white light. Each light source of the plurality of light sources 261 may be arranged to illuminate the sample holder 290 from one direction of a plurality of directions 262. The illumination system 260 may be configured to simultaneously illuminate the sample holder 290 with one or more light sources of the plurality of light sources 261. Put differently, the illumination system 260 may be configured to simultaneously illuminate the sample holder 290 from one or more directions of the plurality of directions 262. At least one direction of the plurality of directions may correspond to an angle larger than a numerical aperture of the microscope objective 170. As is further illustrated in Fig. 3, the plurality of light sources 261 may be arranged on a curved surface 264. Further, "illumination patterns" may be understood as different ways of illuminating the sample by one or more light source of the plurality of light sources. The different illumination patterns may, e.g., be formed by illuminating the sample holder 290 from one or more directions of the plurality of directions 262, and/or by varying the number of light sources of the plurality of light sources 261 that emit light. Thus, the illumination patterns of the plurality of illumination patterns may be formed by illuminating the sample holder 290 by one or more light sources of the plurality of light sources 261. In other words, an illumination pattern of the plurality of illumination patterns may be formed by illuminating the sample holder 290 with just one light source of the plurality of light sources 261. Alternatively, or in combination, an illumination pattern of the plurality of illumination patterns may be formed by illuminating the sample holder 290 simultaneously by a subset of the plurality of light sources 261. It should be understood that illuminating the sample holder 290 may also illuminate a sample 292 (in case it is held be the sample holder 290).

The circuitry 200 may be configured to execute an acquisition function 2100 and a construction function 2110. The circuitry 200 may be configured to execute additional functions. For instance, the circuitry 200 may be configured to execute a sample holder positioning function 2120 configured to position the sample holder relative to the microscope objective 170 and/or the microscope objective cover 10. The circuitry 200 may be further configured to execute a focus function 2130 configured to adjust a relative position of the sample holder 290 and the microscope objective 170 such that the sample 292 may be imaged in focus by the microscope objective 170 and possibly the relay lens 285. It is to be understood that the circuitry 200 may be configured to execute further functions configured to perform other functions of the circuitry 200 and/or the computing device (if present). The acquisition function 2100 may be configured to acquire a set of digital images by being configured to control the illumination system 260 to illuminate the sample 292 with each illumination pattern of the plurality of illumination patterns, and to control the image sensor 270 to capture a digital image for each illumination pattern of the plurality of illumination patterns. The construction function 2110 may be configured to construct a digital image depicting the sample 292 using the acquired set of digital images. The construction function 2110 may be configured to construct the digital image depicting the sample using an algorithm for FPM image construction. The algorithm for FPM image may be a conventional algorithm for FPM image construction. Alternatively, or additionally, the construction function 2110 may be configured to utilize a machine learning model trained to construct a digital image of the sample 292 from the acquired set of digital images. The constructed digital image depicting the sample 292 may have a resolution higher than a digital image acquired by the microscope objective 170 using conventional microscopy.

Figure 4 is a block scheme of a method 40 for arranging the microscope objective cover 10 illustrated in Fig. 1A - Fig. 1D relative to a microscope objective 170. The microscope objective 170 has an optical axis 172. The method 40 comprises mounting S400 the microscope objective cover 10 such that the microscope objective 170 is housed in the cavity 100 of the microscope objective cover 10. The method 40 further comprises arranging S402 the microscope objective cover 10 such that the optical axis 172 of the microscope objective 170 is aligned with the aperture 130 of the end wall 120 of the microscope objective cover 10. The method 40 may further comprise providing S404 a sample 292 to a sample holder 290. The method 40 may further comprise applying S406 a liquid 294 to the sample 292. The method 40 may further comprise positioning S408 the microscope objective cover 10 and the sample holder 290 such that the applied liquid 294 may extend between the sample 292 and the second side 124 of the end wall 120 of the microscope objective cover 10.

The person skilled in the art realizes that the present inventive concept by no means is limited to the preferred variants described above. On the contrary, many modifications and variations are possible within the scope of the appended claims.

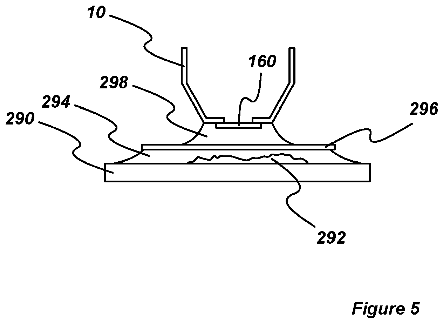

For instance, even though the present inventive concept has been described with reference to observing a sample without using a cover slip, it is to be understood that the microscope objective cover 10 may be used for samples prepared with cover slips. Such example is schematically illustrated in Fig. 5. As in the example of Fig. 5, a liquid 294 applied to a sample 292 to be observed and/or analyzed by the microscope objective 170 (not illustrated in Fig. 5) may be allowed to extend between the sample 292 and a cover slip 296. The cover slip 296 may be arranged on the liquid 294. As is further illustrated in the example of Fig. 5, a further liquid 298 may be applied to the cover slip 296. The microscope objective cover 10 and the sample holder 290 may, as is illustrated in the example of Fig. 5, be positioned such that the further liquid 298 may extend between the cover slip 296 and the second side 124 of the end wall 120 of the microscope objective cover 10. The advantages discussed above in connection with Fig. 2, when applicable, apply also to the example in Fig. 5. Reference is therefore made to the above. Further, the microscope objective cover 10 may reduce, or even prevent, a contact between the microscope objective and the further liquid 298 applied to the sample 292. It is to be understood that even though the microscope objective cover 10 illustrated in Fig. 5 comprises the transparent member 160, the discussed advantages, where applicable, also apply to a microscope objective cover 10 not comprising the transparent member 160.

Additionally, variations to the disclosed variants can be understood and effected by the skilled person in practicing the claimed invention, from a study of the drawings, the disclosure, and the appended claims.

## Claims

1. A microscope objective cover (10) defining a cavity (100), the microscope objective cover (10) having an open top end (110) and an opposing bottom end wall (120), wherein the end wall (120) has a first side (122) facing the cavity (100) and a second side (124) opposite the first side (122), and wherein the end wall (122) is provided with an aperture (130); and
wherein the cavity (100) defined by the microscope objective cover (10) is configured to house a microscope objective (170) such that an optical axis (172) of the microscope objective (170) is aligned with the aperture (130) of the end wall (120).

2. The microscope objective cover (10) according to claim 1, wherein the microscope objective cover (10) comprises:
a first member (140) comprising the bottom end wall (120) of the microscope objective (10); and
a second member (150) having an open first end (152) and an opposing open second end (154), wherein the open second end (154) of the second member (150) is the open top end (110) of the microscope objective cover (10); and
wherein the first member (140) is releasably attachable to the second member (150).

3. The microscope objective cover (10) according to claim 2, wherein the open second end (154) of the second member (150) comprises a flange (156) extending in a radially inward direction.

4. The microscope objective cover (10) according to any one of claims 1-3, further comprising:
a transparent member (160) covering the aperture (130) of the end wall (120).

5. The microscope objective cover (10) according to claim 4, wherein the transparent member (160) is fixedly coupled to the second side (124) of the end wall (120).

6. The microscope objective cover (10) according to any one of claims 1-5, wherein the second side (124) of the end wall (120) comprises one or more protrusions (126).

7. The microscope objective cover (10) according to any one of claims 1-6, further comprising:
an elastically compressible member (128) attached to the second side (124) of the end wall (120).

8. The microscope objective cover (10) according to any one of claims 1-7, wherein the end wall (120) is displaceable relative to the microscope objective (170) in response to being subjected to an external force having a component along a direction towards the cavity (100).

9. A microscope system (20) comprising:
a microscope objective (170) having an optical axis (172); and
a microscope objective cover (10) according to any one of claims 1-8 mountable relative to the microscope objective (170) for achieving a mounted state in which the microscope objective (170) is housed in the cavity (100) of the microscope objective cover (10); and
wherein the microscope objective cover (10) in its mounted state is arranged such that the optical axis (172) of the microscope objective (170) is aligned with the aperture (130) of the end wall (120) of the microscope objective cover (10).

10. The microscope system (20) according to claim 9, wherein the microscope objective cover (10) in its mounted state is arranged such that the end wall (120) in response to an external force is allowed to move relative to the microscope objective (10) along the optical axis (172) of the microscope objective (170).

11. The microscope system (20) according to claim 9 or 10, further comprising:
a sample holder (290) configured to hold a sample (292); and
wherein the microscope objective cover (10) in its mounted state and the sample holder (290) are configured to be positioned in close proximity to each other.

12. The microscope system (20) according to any one of claims 9-11, further comprising:
an image sensor (270), wherein the microscope objective (170) is configured to image a sample (292) onto the image sensor (270);
an illumination system (260) configured to illuminate the sample (292) with a plurality of illumination patterns; and
circuitry (200) configured to execute:
an acquisition function (2100) configured to acquire a set of digital images by being configured to:
control the illumination system (260) to illuminate the sample (292) with each illumination pattern of the plurality of illumination patterns, and
control the image sensor (270) to capture a digital image for each illumination pattern of the plurality of illumination patterns, and
a construction function (2110) configured to construct a digital image depicting the sample (292) using the acquired set of digital images.

13. A method (40) for arranging a microscope objective cover (10) according to any one of claims 1-8 relative to a microscope objective (170) having an optical axis (172), the method (40) comprising:
mounting (S400) the microscope objective cover (10) such that the microscope objective (170) is housed in the cavity (100) of the microscope objective cover (10); and
arranging (S402) the microscope objective cover (10) such that the optical axis (172) of the microscope objective (170) is aligned with the aperture (130) of the end wall (120) of the microscope objective cover (10).

14. The method (40) according to claim 13, further comprising:
providing (S404) a sample (292) to a sample holder (290);
applying (S406) liquid (294) to the sample (292); and
positioning (S408) the microscope objective cover (10) and the sample holder (290) such that liquid (294) extends between the sample (292) and the second side (124) of the end wall (120) of the microscope objective cover (10).
